# EUROPEAN PATENT APPLICATION

(11) **EP 3 386 005 A1**
(43) Date of publication of application: **10.10.2018**
(21) Application number: 18160285.5
(22) Date of filing: 06.03.2018
(51) Int. Cl.: H01M 2/34, H01M 10/04, H01M 10/0562, H01M 10/0585

(54) **STACKED BATTERY**

(30) Priority: 05.04.2017 JP 2017075196
(71) Applicant: Toyota Jidosha Kabushiki Kaisha, Aichi-Ken 471-8571 (JP)
(72) Inventor: HASEGAWA, Hajime, Aichi-ken, 471-8571 (JP); MATSUSHITA, Yuki, Aichi-ken, 471-8571 (JP); TATEISHI, Mitsuru, Aichi-ken, 471-8571 (JP); EBISUZAKI, Hideyo, Aichi-ken, 471-8571 (JP); NISHIMURA, Hideaki, Aichi-ken, 471-8571 (JP); OKUHATA, Yusuke, Aichi-ken, 471-8571 (JP); HAMA, Shigenori, Aichi-ken, 471-8571 (JP); OSE, Norihiro, Aichi-ken, 471-8571 (JP)
(74) Representative: J A Kemp

(57) **Abstract**

Disclosed is a stacked battery including a short-circuit current shunt part that does not cause any short circuit when the battery is normally used, causes stable short circuits in nail penetration, and makes it possible to suppress sudden temperature rising after nail penetration. The stacked battery includes at least one short-circuit current shunt part and a plurality of electric elements, the short-circuit current shunt part and the electric elements being stacked, wherein the short-circuit current shunt part includes a first current collector layer, a second current collector layer, and an insulating layer provided between the first and second current collector layers, all of these layers being stacked, each of the electric elements includes a cathode current collector layer, a cathode material layer, an electrolyte layer, an anode material layer, and an anode current collector layer, all of these layers being stacked, the first current collector layer is electrically connected with the cathode current collector layer, the second current collector layer is electrically connected with the anode current collector layer, the electric elements are electrically connected to each other in parallel, and the insulating layer of the short-circuit current shunt part is formed of a thermosetting resin sheet.

## Description

### FIELD

The present application discloses a stacked battery including a plurality of stacked electric elements.

### BACKGROUND

Patent Literature 1 discloses a stacked polymer electrolyte battery that includes a short-circuiting and heat radiation accelerating unit formed by arranging two metal plates with an insulator therebetween outside a stacked electrode group. It is believed that according to the battery disclosed in Patent Literature 1, when electrodes short-circuit in nail penetration testing on the battery or the like, passing a short-circuit current through the short-circuiting and heat radiation accelerating unit can reduce voltage of electric elements, and makes it possible to smoothly radiate heat generated in the unit etc., to the outside. Patent Literatures 2 and 3 also disclose various techniques for suppressing heat generation caused by short circuits inside a battery due to nail penetration etc.

### Citation List

### Patent Literature

Patent Literature 1: JP 2001-068156 A
Patent Literature 2: JP 6027262 B2
Patent Literature 3: JP 2015-018710 A

### SUMMARY

### Technical Problem

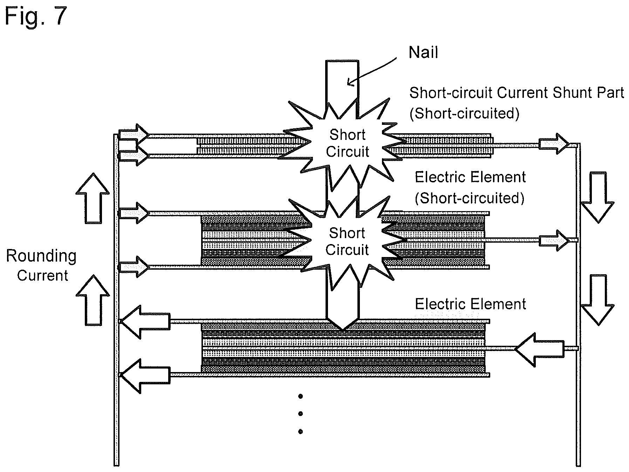

Such a problem arises in a stacked battery formed by electrically connecting a plurality of stacked electric elements in parallel that when nail penetration testing short-circuits some electric elements, electrons flow from some electric elements into the other electric elements (which may be referred to as "rounding current" hereinafter), which results in local rising in temperature of some electric elements. Concerning such a problem, it is expected that a short-circuit current shunt part (a part that causes a short-circuit current to divide, to flow thereinto when the electric elements and the short-circuit current shunt part short-circuit) is provided separately from the electric elements, and not only some electric elements but also the short-circuit current shunt part is short-circuited in nail penetration testing, to shunt a rounding current from the electric elements of higher shunt resistance to not only the electric elements of lower shunt resistance but also the short-circuit current shunt part of low shunt resistance, which can prevent the temperature of just some electric elements from locally rising (Fig. 7).

The short-circuit current shunt part may be configured by a first current collector layer, a second current collector layer, and an insulating layer that is provided therebetween. For example, as disclosed in Patent Literatures 1 and 2, the insulating layer can be formed using various resins. Or, as disclosed in Patent Literature 2, the insulating layer can be formed using ceramic material and/or a battery separator. Or, as disclosed in Patent Literature 3, the surface of a current collector layer can be coated with a thin insulation coating film. It was predicted that whereby the first current collector layer were able to be insulated from the second current collector layer by the insulating layer in normal use, and the first and second current collector layers were able to be touched, and the short-circuit current shunt part was short-circuited in nail penetration.

However, the inventors of the present application encountered a problem that the shunt resistance of the short-circuit current shunt part was sometimes unstable in nail penetration when the short-circuit current shunt part was configured by applying the techniques disclosed in Patent Literatures 1 and 2. Unstable shunt resistance of the short-circuit current shunt part makes it impossible to efficiently shunt the above described rounding current to the short-circuit current shunt part, which might make it impossible to suppress Joule heating of the electric elements.

The inventors also encountered such a problem that the temperature of the short-circuit current shunt part sometimes rose suddenly in nail penetration when the short-circuit current shunt part was configured by applying the techniques disclosed in Patent Literatures 1 and 2. It is ideally necessary that a rounding current is shunted to the short-circuit current shunt part in nail penetration, to suppress not only the temperature of the electric elements from locally rising but also that of the short-circuit current shunt part itself from suddenly rising.

The inventors further encountered a problem that the short-circuit current shunt part sometimes short-circuited before nail penetration or the like when being configured by applying the techniques disclosed in Patent Literatures 2 and 3. This causes a current to flow from the electric elements into the short-circuit current shunt part when the battery is normally used, which makes it impossible to properly operate the battery.

### Solution to Problem

The inventors of the present application had intensively researched into causes of the above problems, and found the followings:
(1) It is believed that the reason why the shunt resistance of the short-circuit current shunt part is unstable in nail penetration when the short-circuit current shunt part is configured by applying the techniques disclosed in Patent Literatures 1 and 2 is that the insulating layer follows the nail, which prevents the first and second current collector layers from being touched;
(2) It is believed that the reason why the temperature of the short-circuit current shunt part suddenly rises in nail penetration when the short-circuit current shunt part is configured by applying the techniques disclosed in Patent Literatures 1 and 2 is that the insulating layer thermally decomposes by Joule heating due to the rounding current; and
(3) It is believed that the reason why the short-circuit current shunt part short-circuits before nail penetration or the like when being configured by applying the techniques disclosed in Patent Literatures 2 and 3 is that the strength of the insulating layer is low, which leads to easy cracking thereof by stacking pressure, constraint pressure, etc. of the battery.

The inventors researched into wide and various materials as material to be applied to the insulating layer of the short-circuit current shunt part, to solve the above problems. As a result, the inventors found that forming the insulating layer of the short-circuit current shunt part by a thermosetting resin sheet does not cause any short circuit when the battery is normally used, causes stable short circuits in nail penetration, and makes it possible to suppress sudden temperature rising after nail penetration.

That is, the present application discloses
a stacked battery comprising at least one short-circuit current shunt part and a plurality of electric elements, the short-circuit current shunt part and the electric elements being stacked, wherein the short-circuit current shunt part comprises a first current collector layer, a second current collector layer, and an insulating layer provided between the first and second current collector layers, all of these layers being stacked, each of the electric elements comprises a cathode current collector layer, a cathode material layer, an electrolyte layer, an anode material layer, and an anode current collector layer, all of these layers being stacked, the first current collector layer is electrically connected with the cathode current collector layer, the second current collector layer is electrically connected with the anode current collector layer, the electric elements are electrically connected to each other in parallel, and the insulating layer of the short-circuit current shunt part is formed of a thermosetting resin sheet, as one means for solving the above problems.

In the stacked battery of the present disclosure, preferably, the directions as follows are the same directions: a direction of stacking the cathode current collector layer, the cathode material layer, the electrolyte layer, the anode material layer, and the anode current collector layer of each of the electric elements; a direction of stacking the electric elements; a direction of stacking the first current collector layer, the insulating layer, and the second current collector layer of the short-circuit current shunt part; and a direction of stacking the short-circuit current shunt part and the electric elements.

In the stacked battery of the present disclosure, preferably, the short-circuit current shunt part is provided at least outside the electric elements in terms of a direction of stacking the electric elements.

In the stacked battery of the present disclosure, preferably, the electrolyte layer is a solid electrolyte layer. That is, the stacked battery of the present disclosure is preferably an all-solid-state battery.

### Advantageous Effects of Invention

In the stacked battery of the present disclosure, the insulating layer of the short-circuit current shunt part is formed of a thermosetting resin sheet, and is especially preferably formed of a thermosetting polyimide resin sheet. The insulating layer formed of a thermosetting resin sheet easily breaks in nail penetration, which can lead to rapid continuity between the first and second current collector layers; and is hard to follow the movement of the nail. This insulating layer has extremely high thermal stability, and moreover has sufficient strength. Thus, the short-circuit current shunt part provided for the stacked battery of the present disclosure does not short-circuit when the battery is normally used, short-circuits stably in nail penetration, and makes it possible to suppress sudden temperature rising after nail penetration.

### BRIEF DESCRIPTION OF DRAWINGS

Fig. 1 is an explanatory schematic view of structure of layers of a stacked battery 100;
Figs. 2A and 2B are explanatory schematic views of structure of layers of a short-circuit current shunt part 10; Fig. 2A is an external perspective view, and Fig. 2B is a cross-sectional view taken along the line IIB-IIB;
Figs. 3A and 3B are explanatory schematic views of structure of layers of electric elements 20; Fig. 3A is an external perspective view, and Fig. 3B is a cross-sectional view taken along the line IIIB-IIIB;
Figs. 4A and 4B are explanatory schematic views of a method of nail penetration testing on the short-circuit current shunt part; Fig. 4A is a schematic view of testing equipment, and Fig. 4B is an explanatory schematic view of positions of nail penetration and a thermocouple;
Fig. 5 shows the results of stability of the shunt resistance of the short-circuit current shunt part in nail penetration testing, from which it can be seen that the shunt resistance stably kept its value low only in Example 1 of using a thermosetting polyimide resin sheet as an insulating layer;
Fig. 6 is an explanatory schematic view of structure of layers of a stacked battery of Application Example 1; and
Fig. 7 is an explanatory schematic view of a rounding current generated in nail penetration etc. when the electric elements are connected in parallel.

### DETAILED DESCRIPTION OF EMBODIMENTS

### 1. Stacked Battery 100

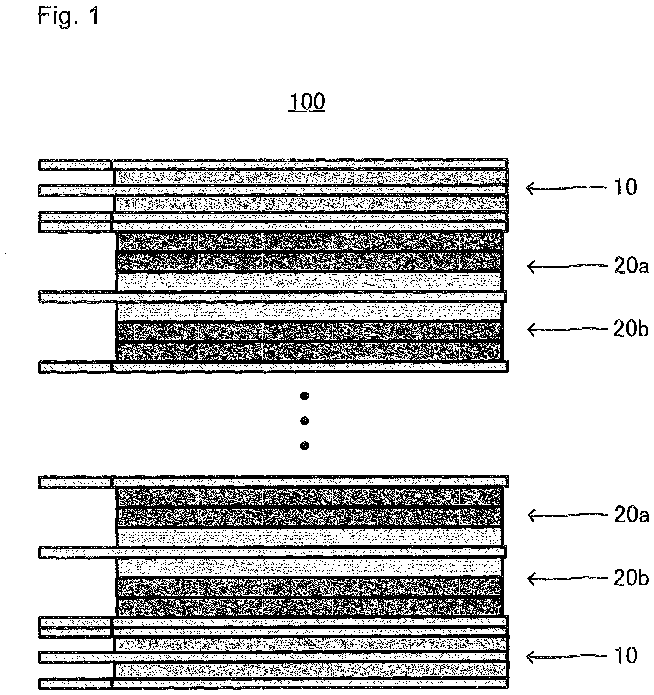

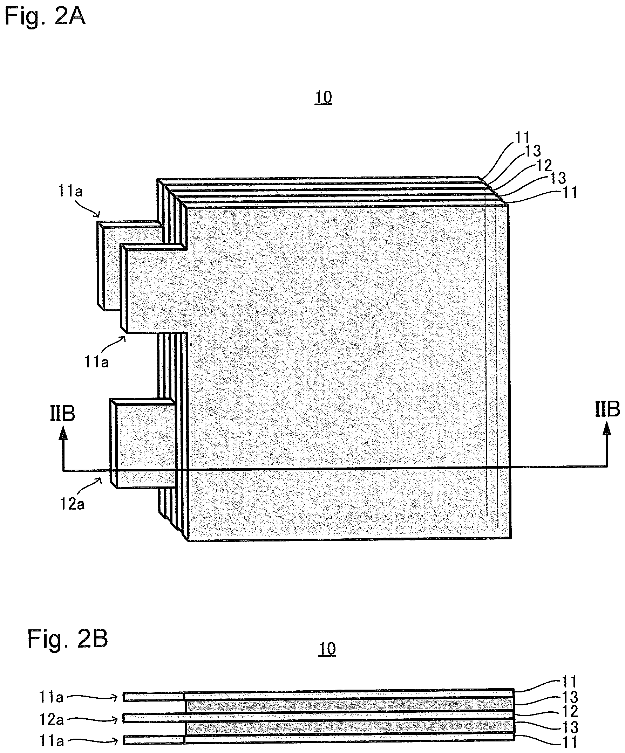

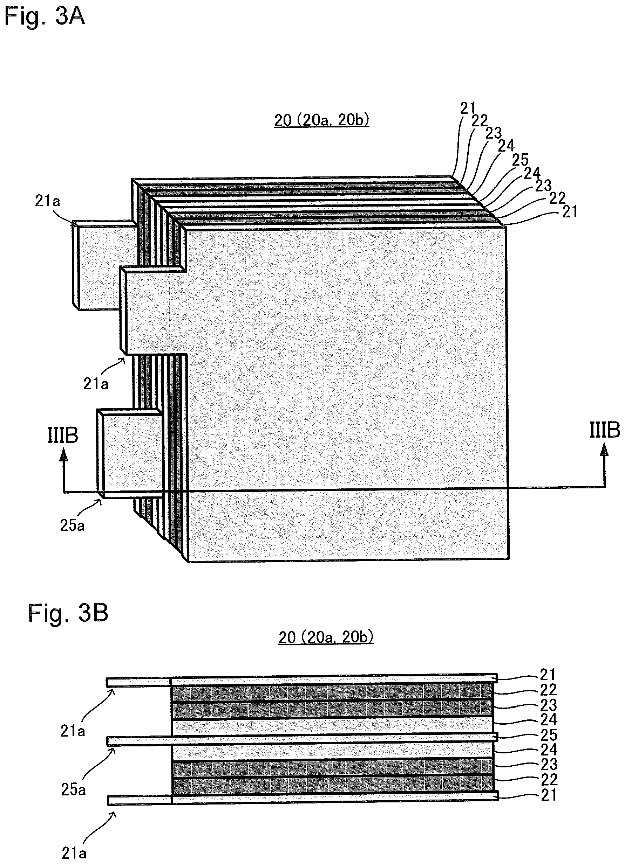

Fig. 1 schematically shows structure of layers of a stacked battery 100. In Fig. 1, portions where current collector layers (current collector tabs) are connected to each other, a battery case, etc. are omitted for convenient explanation. Figs. 2A and 2B schematically show structure of layers of a short-circuit current shunt part 10 that composes the stacked battery 100. Fig. 2A is an external perspective view, and Fig. 2B is a cross-sectional view taken along the line IIB-IIB. Figs. 3A and 3B schematically show structure of layers of electric elements 20 that compose the stacked battery 100. Fig. 3A is an external perspective view, and Fig. 3B is a cross-sectional view taken along the line IIIB-IIIB.

As shown in Figs. 1 to 3B, the stacked battery 100 is formed by stacking at least one short-circuit current shunt part 10 and a plurality of the electric elements 20, 20, .... The short-circuit current shunt part 10 includes first current collector layers 11, a second current collector layer 12, and insulating layers 13 that are provided between the first current collector layers 11 and the second current collector layer 12, which are stacked. Each electric element 20 includes a cathode current collector layer 21, a cathode material layer 22, an electrolyte layer 23, an anode material layer 24, and an anode current collector layer 25, which are stacked. In the stacked battery 100, the first current collector layers 11 are electrically connected with the cathode current collector layers 21, the second current collector layer 12 is electrically connected with the anode current collector layers 25, and a plurality of the electric elements 20, 20, ... are electrically connected with each other in parallel. Here, a feature of the stacked battery 100 is that the insulating layers 13 of the short-circuit current shunt part 10 are formed of thermosetting resin sheets.

### 1.1. Short-circuit Current Shunt Part 10

The short-circuit current shunt part 10 includes the first current collector layers 11, the second current collector layer 12, and the insulating layers 13 that are provided between the first current collector layers 11 and the second current collector layer 12. In the short-circuit current shunt part 10 having such structure, while the first current collector layers 11 are properly insulated from the second current collector layer 12 via the insulating layers 13 when the battery is normally used, the first current collector layers 11 and the second current collector layer 12 touch in nail penetration, which leads to low electric resistance.

### 1.1.1. First Current Collector Layers 11 and Second Current Collector Layer 12

The first current collector layers 11 and the second current collector layer 12 may be formed of metal foil, metal mesh, etc., and are especially preferably formed of metal foil. Metals that may form the current collector layers 11 and 12 include Cu, Ni, Al, Fe, Ti, Zn, Co, Cr, Au, Pt, stainless steel, etc. The current collector layers 11 and 12 may have some layers for adjusting contact resistance, over their surfaces.

The first current collector layers 11 and the second current collector layer 12 are not limited in terms of thickness, but for example, are preferably 0.1 µm to 1 mm, and are more preferably 1 µm to 100 µm in thickness. If being within this range in thickness, the current collector layers 11 and 12 can be more properly touched to each other in nail penetration, to more properly short-circuit the short-circuit current shunt part 10.

As shown in Figs. 2A and 2B, each first current collector layer 11 includes a current collector tab 11a, and is preferably connected to the cathode current collector layers 21 of the electric elements 20 electrically via the current collector tab 11a. On the other hand, the second current collector layer 12 includes a current collector tab 12a, and is preferably connected to the anode current collector layers 25 of the electric elements 20 electrically via the current collector tab 12a. The current collector tabs 11a may be formed of either the same material as, or a different material from the first current collector layers 11. The current collector tab 12a may be formed of either the same material as, or a different material from the second current collector layer 12.

### 1.1.2. Insulating Layer 13

In the stacked battery 100, each insulating layer 13 is formed of a thermosetting resin sheet whose heat resistant temperature is preferably 200°C or more, and more preferably 300°C or more. The insulating layer 13 is especially preferably formed of a thermosetting polyimide resin sheet. "Thermosetting resin sheet" in the present application is a sheet formed of a continuous phase of thermosetting resin. "Heat resistant temperature" means the lowest temperature at which the sheet chemically modifies due to decomposition reaction etc. when the sheet is placed in ambient atmosphere at this temperature (pyrolysis temperature). "Thermosetting polyimide resin" is resin formed of an aromatic polyimide. An aromatic polyimide having a structure represented by the following general formula (1) as the basic skeleton is preferable among aromatic polyimides. In the present application, "sheet" encompasses "film".

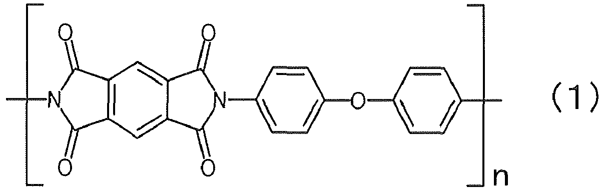

Tensile strength at break σ (MPa) at 25°C of the thermosetting resin sheet measured confirming to JIS K7161 is preferably 10 to 1000. The lower limit thereof is more preferably no less than 100, and the upper limit thereof is more preferably no more than 500. Tensile elongation at break ε (%) at 25°C of the thermosetting resin sheet measured confirming to JIS K7161 is preferably 10 to 200. The lower limit thereof is more preferably no less than 30, and the upper limit thereof is more preferably no more than 100. The above described effect is especially outstanding with a thermosetting resin sheet having such mechanical properties.

The thermosetting resin sheet (preferably thermosetting polyimide resin sheet) (1) does not break when the stacked battery is normally used, (2) easily breaks when a nail is penetrated, (3) does not closely adhere to the current collector layers or follow the nail, and (4) moreover has extremely high thermal stability. When a thermosetting polyimide resin sheet is used as the thermosetting resin sheet, this thermosetting polyimide resin sheet may contain a material other than thermosetting polyimide resin as long as the above problems can be solved. From the viewpoint that the effect can be exerted more outstandingly, the thermosetting polyimide resin sheet preferably consists of thermosetting polyimide resin only (although unavoidable impurities are allowed to be contained).

The thickness of the thermosetting resin sheet is not limited as long as the above problems can be solved, and can be determined according to the properties to be aimed. The thickness thereof is normally 0.1 µm to 1 mm, preferably 1 µm to 100 µm, and more preferably 10 µm to 100 µm.

If the insulating layer 13 is formed of a thermoplastic resin sheet, it is believed that the insulating layer 13 follows a nail to deform when the nail is penetrated through the short-circuit current shunt part 10. That is, the insulating layer 13 is dragged by the nail, to continuously repeat its deformation, which leads to an unstable contact state of the first current collector layers 11 and the second current collector layer 12, which might result in large fluctuation of the shunt resistance of the short-circuit current shunt part 10. This same result follows if the insulating layer 13 is formed of soft material such as a silicon sheet, or material to cause plastic deformation. In this point, forming the insulating layer 13 by the thermosetting resin sheet makes the insulating layer 13 easy to break when a nail is penetrated through the short-circuit current shunt part 10, and makes it possible to suppress deformation following the nail, which lead to stable shunt resistance of the short-circuit current shunt part 10.

If the insulating layer 13 is formed of a thermoplastic resin sheet, the insulating layer 13 might be dissolved or thermally decomposed by Joule heating due to a rounding current when a nail is penetrated through the short-circuit current shunt part 10. In this case, dissolution prevents the current collector layers from touching to each other, and chemical reaction after thermal decomposition excessively raises the temperature of the short-circuit current shunt part 10. In this point, forming the insulating layer 13 by the thermosetting resin sheet makes it possible to suppress thermal decomposition of the insulating layer 13. Specifically, the above described polyimide resin has extremely high thermal resistance among thermosetting resins, and is seldom decomposed even if the temperature of the short-circuit current shunt part 10 excessively rises due to some causes. In this point, it is advantageous to form the insulating layer 13 by the thermosetting polyimide resin sheet among thermosetting resin sheets.

If the insulating layer 13 is formed of brittle material such as ceramic, the insulating layer 13 might be broken by just a slight stress applied to the short-circuit current shunt part 10. Specifically, such a problem is outstanding when just thin oxide films are provided over the surfaces of the current collector layers 11 and 12 as the insulating layers. When the stacked battery 100 is an all-solid-state battery as described later, there is a case where the battery is constrained by a constraining member. Therefore, the insulating layer 13 is necessary to have especially high strength. When the insulating layer 13 is thickened in order to secure its strength, it becomes difficult to touch the first current collector layers 11 to the second current collector layer 12 in nail penetration, and energy density of the battery becomes lowered because a space occupied by the insulating layer 13 becomes larger. In this point, forming the insulating layer 13 by the thermosetting resin sheet makes it possible to easily touch the first current collector layers 11 to the second current collector layer 12 by easy breakage in nail penetration etc. while sufficient strength is secured to properly keep insulation of the short-circuit current shunt part 10 when the battery is normally used.

### 1.2. Electric Elements 20

Each electric element 20 is formed by stacking the cathode current collector layer 21, the cathode material layer 22, the electrolyte layer 23, the anode material layer 24, and the anode current collector layer 25. That is, the electric element 20 can function as a single cell.

### 1.2.1. Cathode Current Collector Layer 21

The cathode current collector layer 21 may be formed of metal foil, metal mesh, etc., and is especially preferably formed of metal foil. Metals that may form the cathode current collector layer 21 include Ni, Cr, Au, Pt, Al, Fe, Ti, Zn, stainless steel, etc. The cathode current collector layer 21 may have some coating layer for adjusting contact resistance, over its surface, which is, for example, a coating layer containing conductive material and resin. The thickness of the cathode current collector layer 21 is not limited, but for example, is preferably 0.1 µm to 1 mm, and is more preferably 1 µm to 100 µm.

As shown in Figs. 3A and 3B, preferably, the cathode current collector layer 21 includes a cathode current collector tab 21a at part of an outer edge thereof. The tab 21a makes it possible to electrically connect the first current collector layer 11 and the cathode current collector layer 21 easily, and to electrically connect the cathode current collector layers 21 to each other easily in parallel.

### 1.2.2. Cathode Material Layer 22

The cathode material layer 22 is a layer containing at least active material. When the stacked battery 100 is an all-solid-state battery, the cathode material layer 22 may further contain a solid electrolyte, a binder, a conductive additive, etc. optionally, in addition to the active material. When the stacked battery 100 is an electrolyte solution based battery, the cathode material layer 22 may further contain a binder, a conductive additive, etc. optionally, in addition to the active material. Known active materials may be used as the active material. One may select two materials different in electric potential at which predetermined ions are stored and released (charge and discharge potential) among known active materials, to use a material displaying noble potential as cathode active material, and a material displaying base potential as anode active material described later. For example, when a lithium ion battery is configured, various lithium containing composite oxides such as lithium cobaltate, lithium nickelate, LiNi_{1/3}Co_{1/3}Mn_{1/3}O₂, lithium manganate, and spinel lithium compounds can be used as the cathode active material. When the stacked battery 100 is an all-solid-state battery, the surface of the cathode active material may be coated with an oxide layer such as a lithium niobate layer, a lithium titanate layer, and a lithium phosphate layer. When the stacked battery 100 is an all-solid-state battery, its solid electrolyte is preferably an inorganic solid electrolyte. This is because ion conductivity of inorganic solid electrolytes is higher compared with organic polymer electrolytes. This is also because inorganic solid electrolytes are superior in heat resistance compared with organic polymer electrolytes. This is moreover because pressure applied to the electric elements 20 in nail penetration is higher compared to the case using an organic polymer electrolyte, which makes the effect of the stacked battery 100 of the present disclosure outstanding. Examples of inorganic solid electrolytes include solid electrolytes of oxides such as lithium lanthanum zirconate, and solid electrolytes of sulfides such as Li₂S-P₂S₅. Especially, a sulfide solid electrolyte containing Li₂S-P₂S₅ is preferable, and a sulfide solid electrolyte containing no less than 50 mol% of Li₂S-P₂S₅ is more preferable. As the binder, various binders such as butadiene rubber (BR), acrylate-butadiene rubber (ABR), and polyvinylidene difluoride (PVdF) can be used. Carbon materials such as acetylene black and ketjenblack, and metallic materials such as nickel, aluminum and stainless steel can be used as the conductive additive. The contents of the constituents in the cathode material layer 22 may be the same contents as in a conventional layer. The shape of the cathode material layer 22 may be the same shape as a conventional layer as well. Specifically, from the viewpoint that the stacked battery 100 can be easily configured, the cathode material layer 22 is preferably a sheet. In this case, the thickness of the cathode material layer 22 is, for example, preferably 0.1 µm to 1 mm, and more preferably 1 µm to 150 µm.

### 1.2.3. Electrolyte Layer 23

The electrolyte layer 23 is a layer containing at least an electrolyte. When the stacked battery 100 is an all-solid-state battery, the electrolyte layer 23 may be a solid electrolyte layer containing a solid electrolyte, and optionally a binder. The solid electrolyte is preferably the above described inorganic solid electrolyte. The same binder used for the cathode material layer 22 may be properly selected to be used as the binder. The contents of the constituents in the solid electrolyte layer 23 may be the same contents as in a conventional layer. The shape of the solid electrolyte layer 23 may be the same shape as a conventional layer as well. Specifically, from the viewpoint that the stacked battery 100 can be easily configured, the solid electrolyte layer 23 is prefearbly a sheet. In this case, the thickness of the solid electrolyte layer 23 is, for example, preferably 0.1 µm to 1 mm, and more preferably 1 µm to 100 µm. On the other hand, when the stacked battery 100 is an electrolyte solution based battery, the electrolyte layer 23 contains an electrolyte solution and a separator. These electrolyte solution and separator are obvious for the person skilled in the art, and thus, detailed description thereof is omitted here.

### 1.2.4. Anode Material Layer 24

The anode material layer 24 is a layer containing at least active material. When the stacked battery 100 is an all-solid-state battery, the anode material layer 24 may further contain a solid electrolyte, a binder, a conductive additive, etc. optionally, in addition to the active material. When the stacked battery 100 is an electrolyte solution based battery, the anode material layer 24 may further contain a binder, a conductive additive, etc. optionally, in addition to the active material. Known active materials may be used as the active material. One may select two materials different in electric potential at which predetermined ions are stored and released (charge and discharge potential) among known active materials, to use a material displaying noble potential as the above described cathode active material, and a material displaying base potential as the anode active material. For example, when a lithium ion battery is configured, carbon materials such as graphite and hard carbon, various oxides such as lithium titanate, Si and Si alloys, or metal lithium and lithium alloys can be used as the anode active material. The same solid electrolyte, binder, and conductive additive used for the cathode material layer 22 can be properly selected to be used. The contents of the constituents in the anode material layer 24 may be the same contents as in a conventional layer. The shape of the anode material layer 24 may be the same shape as a conventional layer as well. Specifically, from the viewpoint that the stacked battery 100 can be easily configured, the anode material layer 24 is preferably a sheet. In this case, the thickness of the anode material layer 24 is, for example, preferably 0.1 µm to 1 mm, and more preferably 1 µm to 100 µm. The thickness of the anode material layer 24 is preferably determined so that the capacity of the anode is larger than that of the cathode.

### 1.2.5. Anode Current Collector Layer 25

The anode current collector layer 25 may be formed of metal foil, metal mesh, etc., and is especially preferably formed of metal foil. Metals that may form the anode current collector layer 25 include Cu, Ni, Fe, Ti, Co, Zn, stainless steel, etc. The anode current collector layer 25 may have some coating layer for adjusting contact resistance, over its surface, which is, for example, a coating layer containing conductive material and resin. The thickness of the anode current collector layer 25 is not limited, but for example, is preferably 0.1 µm to 1 mm, and is more preferably 1 µm to 100 µm.

As shown in Figs. 3A and 3B, preferably, the anode current collector layer 25 includes an anode current collector tab 25a at part of an outer edge thereof. The tab 25a makes it possible to electrically connect the second current collector layer 12 to the anode current collector layer 25 easily, and to electrically connect the anode current collector layers 25 to each other easily in parallel.

### 1.3. Arrangement and Connection Manner of Short-circuit Current Shunt Part and Electric Elements

### 1.3.1. Arrangement of Electric Elements

In the stacked battery 100, the number of stacking the electric elements 20 is not limited, but may be properly determined according to the power of the battery to be aimed. In this case, a plurality of the electric elements 20 may be stacked so as to directly touch to each other, and may be stacked via some layers (for example, insulating layers) or spaces (air spaces). In view of improving the power density of the battery, a plurality of the electric elements 20 are preferably stacked so as to directly touch to each other as shown in Fig. 1. As shown in Figs. 1, 3A and 3B, two electric elements 20a and 20b preferably share the anode current collector 25, which improves the power density of the battery more. Further, as shown in Fig. 1, in the stacked battery 100, a direction of stacking a plurality of the electric elements 20 is preferably the same direction as that of stacking the layers 21 to 25 of the electric elements 20, which makes it easy to constrain the stacked battery 100, to improve the power density of the battery more.

### 1.3.2. Electric Connection of Electric Elements each other

In the stacked battery 100, a plurality of the electric elements 20, 20, ... are electrically connected to each other in parallel. In the electric elements connected in parallel as described above, when one electric element short-circuits, electrons concentratedly flow into the one electric element from the other electric elements. That is, Joule heating is easy to be large when the battery short-circuits. In other words, in the stacked battery 100 including a plurality of the electric elements 20, 20, ... connected in parallel as described above, the effect of providing the short-circuit current shunt part 10 is more outstanding. A conventionally known member may be used as a member for electrically connecting the electric elements 20 to each other. For example, as described above, one can provide the cathode current collector tabs 21a for the cathode current collector layers 21, and the anode current collector tabs 25a for the anode current collector layers 25, to electrically connect the electric elements 20 to each other in parallel via the tabs 21a and 25a.

### 1.3.3. Electric Connection of Short-circuit Current Shunt Part and Electric Elements

In the stacked battery 100, the first current collector layers 11 of the short-circuit current shunt part 10 are electrically connected with the cathode current collector layers 21 of the electric elements 20, and the second current collector layer 12 of the short-circuit current shunt part 10 is electrically connected with the anode current collector layers 25 of the electric elements 20. Electric connection of the short-circuit current shunt part 10 and the electric elements 20 like this makes it possible to shunt a rounding current from the other electric elements (for example, the electric element 20b) to the short-circuit current shunt part 10 when the short-circuit current shunt part 10 and some electric elements (for example, the electric element 20a) short-circuit, for example. A conventionally known member may be used as a member for electrically connecting the short-circuit current shunt part 10 and the electric elements 20. For example, as described above, one can provide the first current collector tabs 11a for the first current collector layers 11, and the second current collector tab 12a for the second current collector layer 12, to electrically connect the short-circuit current shunt part 10 and the electric elements 20 via the tabs 11a and 12a.

### 1.3.4. Positional Relationship between Short-circuit Current Shunt Part and Electric Elements

The short-circuit current shunt part 10 and the electric elements 20, 20, ... have only to be stacked to each other. In this case, the short-circuit current shunt part 10 and the electric elements may be directly stacked, or indirectly stacked via other layers (insulating layers, heat insulating layers, etc.) as long as the above described problems can be solved. The short-circuit current shunt part 10 may be stacked outside a plurality of the electric elements 20, 20, ..., between a plurality of the electric elements 20, 20, ..., or both outside and between a plurality of the electric elements 20, 20, .... Especially, as shown in Fig. 1, when the short-circuit current shunt part 10 and a plurality of the electric elements 20, 20, ... are stacked, the short-circuit current shunt part 10 is preferably provided at least outside a plurality of the electric elements 20, 20, ... in terms of the stacking direction (the direction of stacking a plurality of the electric elements 20, 20, ...). Whereby in nail penetration, the short-circuit current shunt part 10 short-circuits before the electric elements 20, 20, ..., which make it possible to generate a rounding current from the electric elements 20 to the short-circuit current shunt part 10, and further to suppress heat generation inside the electric elements 20.

Short circuits of the battery due to nail penetration are easy to occur when the nail is penetrated from the cathode current collector layers 21 toward the anode current collector layers 25 of the electric elements 20 (or from the anode current collector layers 25 toward the cathode current collector layers 21). In this point, in the stacked battery 100, a direction of nail penetration is preferably the same direction as that of stacking the layers. More specifically, in the stacked battery 100, the following directions are preferably the same: the direction of stacking the cathode current collector layer 21, the cathode material layer 22, the electrolyte layer 23, the anode material layer 24, and the anode current collector layer 25 in each electric element 20; the direction of stacking a plurality of the electric elements 20; the direction of stacking the first current collector layers 11, the insulating layers 13, and the second current collector layer 12 in the short-circuit current shunt part 10; and a direction of stacking the short-circuit current shunt part 10 and a plurality of the electric elements 20, 20, ....

### 1.3.5. Relationship between Short-circuit Current Shunt Part and Electric Elements in Size

In the stacked battery 100, the short-circuit current shunt part 10 covers as much part of the electric elements 20 as possible, which makes it easy to short-circuit the short-circuit current shunt part 10 before the electric elements 20 in nail penetration. In view of this, for example, in the stacked battery 100, the outer edge of the short circuit current shunt part 10 preferably exists outside the outer edges of the electric elements 20, 20, ... when viewed in the direction of stacking the short circuit current shunt part 10 and a plurality of the electric elements 20, 20, .... Alternatively, as shown in Fig. 1, when the direction of stacking a plurality of the electric elements 20, 20, ... is the same direction as that of stacking the layers 21 to 25 in the electric elements 20, the outer edge of the short-circuit current shunt part 10 preferably exists outside the outer edges of the cathode material layers 22, the electrolyte layers 23, and the anode material layers 24 when viewed in the direction of stacking the short-circuit current shunt part 10 and a plurality of the electric elements 20, 20,.... In this case, the first current collector layers 11 of the short-circuit current shunt part 10 and the anode current collector layers 25 of the electric elements 20 may not short-circuit. That is, an insulator or the like is provided between the short-circuit current shunt part 10 and the electric elements 20, so that short circuits of the short-circuit current shunt part 10 and the electric elements 20 can be prevented even if the short-circuit current shunt part 10 is enlarged.

On the other hand, from the viewpoints that the energy density of the battery is further improved, and short circuits of the short-circuit current shunt part 10 and the electric elements 20 can be easily prevented as described above, the short-circuit current shunt part 10 is preferably as small as possible. That is, in view of these, in the stacked battery 100, the outer edge of the short-circuit current shunt part 10 preferably exists inside the outer edges of the electric elements 20, 20, ... when viewed in the direction of stacking the short-circuit current shunt part 10 and a plurality of the electric elements 20, 20, .... Alternatively, when the direction of stacking a plurality of the electric elements 20, 20, ... is the same direction as that of stacking the layers 21 to 25 in the electric elements 20, the outer edge of the short-circuit current shunt part 10 preferably exists inside the outer edges of the cathode material layers 22, the electrolyte layers 23, and the anode material layers 24 when viewed in the direction of stacking the short-circuit current shunt part 10 and a plurality of the electric elements 20, 20, ....

As described above, in the stacked battery 100, a rounding current from the other electric elements (for example, the electric element 20b) can be shunted to the short-circuit current shunt part 10 when the short-circuit current shunt part 10 and some electric elements (for example, the electric element 20a) short-circuit due to nail penetration. Here, in the stacked battery 100, the insulating layers 13 of the short-circuit current shunt part 10 is formed of the thermosetting resin sheets. Thus, as described above, the short-circuit current shunt part 10 does not short-circuit when the battery is normally used, and further, the shunt resistance of the short-circuit current shunt part 10 is stable in nail penetration testing, and excess temperature rising in the short-circuit current shunt part 10 can be suppressed as well.

### 2. Method for Producing Stacked Battery

The short-circuit current shunt part 10 can be easily made by arranging the insulating layers 13 (thermosetting resin sheet) between the first current collector layers 11 (for example, metal foil) and the second current collector layer 12 (for example, metal foil). As shown in Figs. 2A and 2B, one may arrange the insulating layers 13, 13 over both faces of the second current collector layer 12, and further arrange the first current collector layers 11, 11 over the surfaces of the insulating layers 13, 13 which are in the opposite side of the second current collector layer 12. Here, the layers may be stuck to each other using an adhesive, resin, etc. in order to keep the shape of the short-circuit current shunt part 10. In this case, an adhesive or the like is not necessary to be applied all over the faces of the layers, but has only to be applied to part of a surface of each layer.

Each electric element 20 can be made by any known method. For example, when an all-solid-state battery is produced, one may form the cathode material layer 22 by coating the surface of the cathode current collector layer 21 with cathode material in a wet process, to dry the resultant, form the anode material layer 24 by coating the surface of the anode current collector layer 25 with anode material in a wet process, to dry the resultant, transfer the electrolyte layer 23 containing a solid electrolyte etc. between the cathode material layer 21 and the anode material layer 24, and integrally press-form the layers, to make the electric element 20. Pressing pressure at this time is not limited, but for example, is preferably no less than 2 ton/cm². These making procedures are just an example, and the electric element 20 can be made by procedures other than them as well. For example, the cathode material layer etc. can be formed by a dry process instead of a wet process.

The short-circuit current shunt part 10 made as described above is stacked onto a plurality of the electric elements 20. In addition, the tabs 11a provided for the first current collector layers 11 are connected with the cathode current collector layers 21, the tab 12a provided for the second current collector layer 12 is connected with the anode current collector layers 25, the tabs 21a of the cathode current collector layers 21 are connected with each other, and the tabs 25a of the anode current collector layers 25 are connected with each other, which makes it possible to electrically connect the short-circuit current shunt part 10 with the electric elements 20, and to electrically connect a plurality of the electric elements 20 with each other in parallel. If necessary, at least one short-circuit current shunt part is stacked onto a portion which is adjacent to the short-circuit current shunt part 10 but is not adjacent to the electric elements 20, and the current collector layers 11 and 12 are electrically connected with the electric elements 20 in the same way as the above. This stacked body formed via electric connection as described above is vacuum-sealed in a battery case of laminate film, a stainless steel can or the like, which makes it possible to make an all-solid-state battery as the stacked battery. These making procedures are just an example, and an all-solid-state battery can be made by procedures other than them as well.

Alternatively, one may also produce an electrolyte solution based battery as the stacked battery by: arranging a separator instead of the above described solid electrolyte layer; making a stacked body formed via electrical connection in the same way as described above; and enclosing the stacked body in a battery case filled with an electrolyte solution etc. When an electrolyte solution based battery is produced, press-forming on the layers may be omitted.

As described above, the stacked battery 100 of the present disclosure can be easily produced by applying a conventional method for producing a stacked battery.

### 3. Additional Notes

The above description showed the embodiment of configuring the short-circuit current shunt part by two first current collector layers, two insulating layers, and one second current collector layer. The stacked battery of the present disclosure is not restricted to this embodiment. The short-circuit current shunt part has only to include the insulating layer between the first and second current collector layers, and the numbers of the layers are not limited.

The above description showed the embodiment that two electric elements share one anode current collector layer. The stacked battery of the present disclosure is not restricted to this embodiment. Each electric element has only to function as a single cell, where the cathode current collector layer, the cathode material layer, the electrolyte layer, the anode material layer, and the anode current collector layer are stacked.

The above description showed the embodiment of providing the short-circuit current shunt part on each outer side of a plurality of the electric elements in terms of their stacking direction in the stacked battery. The number of the short-circuit current shunt parts is not limited to this. A plurality of the short-circuit current shunt parts may be provided on the outer side in the stacked battery. The short-circuit current shunt parts may be provided not only outside a plurality of the electric elements in terms of their stacking direction, but also between a plurality of the electric elements.

The above description showed the embodiment of stacking a plurality of the electric elements. Some effect is believed to be brought about even in an embodiment that a plurality of the electric elements are not stacked in the stacked battery (embodiment of being formed of only a single cell). It is noted that Joule heating due to short circuits in nail penetration etc. is easier to increase in the embodiment of stacking a plurality of the electric elements than in the embodiment of stacking one electric element. That is, it can be said that the effect of providing the short-circuit current shunt part is more outstanding in the embodiment of stacking a plurality of the electric elements, and this point is one of advantages of the stacked battery of this disclosure.

In the above description, the current collector tabs protrude from the short-circuit current shunt part and the electric elements. However, in the stacked battery of the present disclosure, the current collector tabs do not have to be included. For example, the current collector layers of large areas are used, outer edges of a plurality of the current collector layers are made to protrude in the stacked body of the short-circuit current shunt part and the electric elements, and conducting material is held between the protruding current collector layers, which makes it possible to electrically connect the current collector layers with each other without the tabs provided. Alternatively, the current collector layers may be electrically connected with each other via conductor wires or the like instead of the tabs.

The above description showed the stacked battery encompassing both an electrolyte solution based battery and an all-solid-state battery. However, it is believed that the technique of the present disclosure exerts greater effect when the stacked battery is used as an all-solid-state battery. A gap in an electric element is smaller, and pressure applied to the electric elements is higher when a nail is penetrated through the electric elements in nail penetration in an all-solid-state battery compared to an electrolyte solution based battery. Thus, it is believed that the shunt resistance of the electric elements becomes low, and most of a rounding current flows into some electric elements in an all-solid-state battery. Moreover, there is a case where constraint pressure is applied to the electric elements in an all-solid-state battery in order to reduce the internal resistance of the electric elements. In this case, it is believed that constraint pressure is applied to the electric elements in their stacking direction (direction where the cathode current collector layers face the anode current collector layers), and in nail penetration, pressure from the nail and the constraint pressure are added to apply to the electric elements, which makes it easy to touch the cathode current collector layers to the anode current collector layers, to short-circuit them, and makes it easy for the shunt resistance of the electric elements to be low. Therefore, it is believed that the effect of providing the short-circuit current shunt part to shunt a rounding current is outstanding. Moreover, it is believed that because in an all-solid-state battery, the above described problem of cracking the insulating layers in the short-circuit current shunt part due to application of constraint pressure is easy to arise, the effect of using thermosetting resin sheets of high strength at break, especially thermosetting polyimide resin sheets as the insulating layers is outstanding. In contrast, a battery case of an electrolyte solution based battery is generally filled with an electrolyte solution, every layer is immersed with the electrolyte solution, and the electrolyte solution is supplied to the gaps between the layers, which makes pressure applied by a nail in nail penetration lower compared with an all-solid-state battery. Therefore, it is believed that the effect of providing the short-circuit current shunt part is relatively less compared to the case of an all-solid-state battery.

When the electric elements are electrically connected with each other in series using a bipolar electrode, it is believed that if a nail is penetrated through some electric elements, a rounding current flows via the nail from the other electric elements to some electric elements. That is, the rounding current flows via the nail, which has high contact resistance, and thus the current flow thereof is small. When the electric elements are electrically connected with each other in series via a bipolar electrode, a rounding current is believed to be the largest when a nail is penetrated through all the electric elements. In this case, it is believed that discharge of the electric elements has sufficiently progressed already, and thus, it is difficult to occur that the temperature of some electric elements locally rises. In this point, it is believed that the effect of the short-circuit current shunt part is less compared with the case where the electric elements are electrically connected in parallel. Thus, the technique of this disclosure can be said to exert the effect especially outstandingly on a battery where the electric elements are electrically connected with each other in parallel.

### Examples

### 1. Making Short-circuit Current Shunt Part

### 1.1. Example 1

An aluminum foil of 15 µm in thickness was used as a first current collector layer, and a copper foil of 15 µm in thickness was used as a second current collector layer. A thermosetting polyimide resin film (thickness: 25 µm, Kapton manufactured by Du Pont-Toray Co., Ltd.) was held between the aluminum foil and copper foil as an insulating layer, to be fixed by an adhesive, to obtain a short-circuit current shunt part.

### 1.2. Comparative Example 1

A heptane solution of heptane and 5 wt% of a BR based binder (manufactured by JSR Corporation), and a sulfide solid electrolyte (mean particle size: 2.5 µm, Li₂S-P₂S₅ based glass ceramic containing LiI and LiBr) were put into a vessel of polypropylene, and stirred with an ultrasonic dispersive device (UH-50 manufactured by SMT Corporation) for 30 seconds. Next, the vessel was shaken with a mixer (TTM-1 manufactured by Sibata Scientific Technology Ltd.) for 30 minutes. After that, the resultant was stirred with the ultrasonic dispersive device for 30 seconds. Further, the vessel was shaken with the mixer for 3 minutes, and thereafter the aluminum foil that was the first current collector layer was coated with the obtained paste using an applicator according to a blade method. After air-dried, the resultant was dried on a hot plate at 100°C for 30 minutes, to form a solid electrolyte layer on the aluminum foil (first current collector layer). The copper foil (second current collector layer) was laminated to the surface of the solid electrolyte layer, to be fixed with an adhesive, to obtain a short-circuit current shunt part.

### 1.3. Comparative Example 2

A short-circuit current shunt part was obtained in the same way as Example 1 except that a glass fabric (thickness: 25 µm, manufactured by Asahi Kasei Corp.) was held as the insulating layer.

### 1.4. Comparative Example 3

A short-circuit current shunt part was obtained in the same way as Example 1 except that a silicon sheet (thickness: 25 µm) was held as the insulating layer.

### 1.5. Comparative Example 4: Thermoplastic Polyimide Resin Sheet

A short-circuit current shunt part was obtained in the same way as Example 1 except that a thermoplastic polyimide resin sheet (thickness: 25 µm, Midfil manufactured by Kurabo Industries Ltd.) was held as the insulating layer.

### 2. Evaluation of Shunt Resistance of Short-circuit Current Shunt Part in Nail Penetration

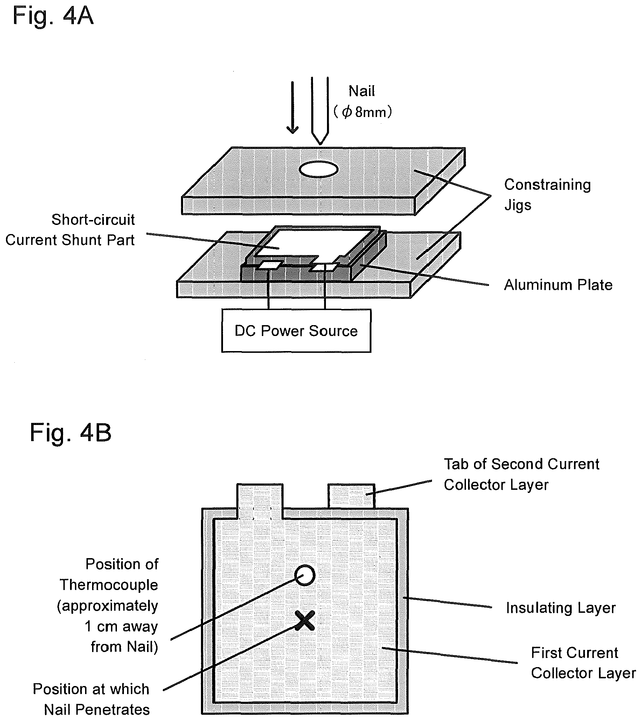

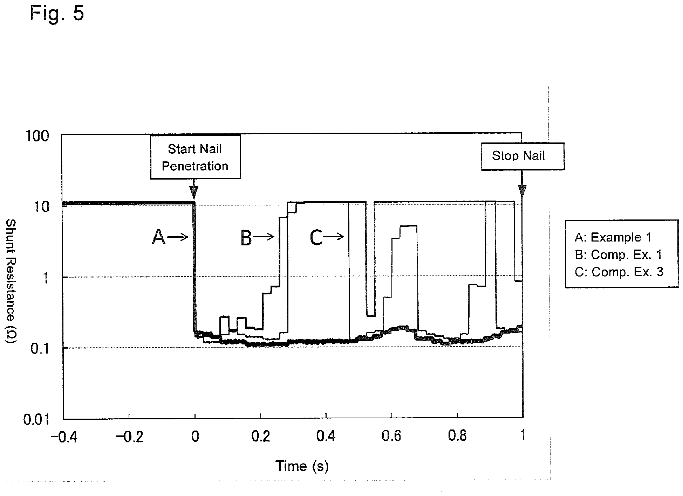

Nail penetration testing equipment as shown in Fig. 4A was used, to evaluate the shunt resistance of the short-circuit current shunt part in nail penetration. Specifically, the short-circuit current shunt part was disposed on an aluminum plate, and a direct-current power source was connected to tabs of the short-circuit current shunt part while both faces of the short-circuit current shunt part were constrained by constraining jigs. Constraint pressure was 1.5 to 15 ton/cm². After constraint, a current (30 to 90 A) was passed from the direct-current power source to the short-circuit current shunt part, and the short-circuit current shunt part was penetrated by a nail (8 mm in diameter, 60 degrees in point angle) at 25 mm/sec in velocity, to confirm change in shunt resistance of the short-circuit current shunt part since the start until the end of the nail penetration. The results are shown in the following Table 1 and Fig. 5:

**Table 1**

| | Type of Insulating Layer | Resistance at Constraint (mΩ) | Resistance in Nail Penetration (mΩ) |
|---|---|---|---|
| Example 1 | Thermosetting Polyimide Resin Sheet | O.L | 10 |
| Comp. Ex. 1 | Solid Electrolyte Layer | O.L | unstable |
| Comp. Ex. 2 | Glass Fabric | 10 | - |
| Comp. Ex. 3 | Silicon Sheet | O.L | unstable |

As apparent from the results shown in Table 1 and Fig. 5, when a solid electrolyte layer or a silicon sheet was used as the insulating layer (Comparative Examples 1 and 3), the short-circuit current shunt part repeated short circuits and insulation in nail penetration testing, which led to unstable shunt resistance. It is believed that contact between the current collector layers was not stable because soft material like a silicon sheet follows a nail in nail penetration, to deform. It is also believed that contact between the current collector layers was not stable because material that causes plastic deformation like a solid electrolyte closely adheres to current collector layers when constraint pressure is applied, which makes a solid electrolyte exist between the current collector layers.

When a glass fabric was used as the insulating layer (Comparative Example 2), the constraining member applied pressure to the stacked body, which caused short circuits of the short-circuit current shunt part.

On the other hand, when a thermosetting polyimide resin sheet was used as the insulating layer (Example 1), short circuits due to constraint by the constraining member did not occur, and the shunt resistance of the short-circuit current shunt part was able to be stabilized in nail penetration testing. A thermosetting polyimide resin sheet has a smaller elongation percentage compared with a silicon sheet, and does not closely adhere to current collector layers, unlike a solid electrolyte layer. Therefore, it is believed that breakage easily occurred, deformation following the nail etc. was able to be suppressed, contact between the current collector layers was not prevented, and the shunt resistance of the short-circuit current shunt part was stabilized in nail penetration through the short-circuit current shunt part.

### 3. Evaluation of Temperature Rising in Short-circuit Current Shunt Part in Nail Penetration

Using the equipment shown in Fig. 4A, the short-circuit current shunt part was penetrated by a nail, to cause short circuits in the same way as the above. A predetermined current was passed from the direct-current power source via the tabs to the short-circuit current shunt part for a certain time under a state where the short-circuit current shunt part short-circuited, and the maximum achievable temperature of the short-circuit current shunt part at this time was measured. The temperature of the short-circuit current shunt part was measured by a thermocouple stuck to a portion approximately 1 cm away from a nail-penetrating part on the top face of the short-circuit current shunt part as shown in Fig. 4B. The results are shown in the following Table 2:

**Table 2**

| | 30A | 40 A | 50 A | 60A | 70 A | 80A | 90 A |
|---|---|---|---|---|---|---|---|
| Example 1 | 56°C | 59°C | 81°C | 125°C | 196°C | 292°C | 370°C |
| Comp. Ex. 4 | 88°C | 91°C | unmeasurable (Sudden Temperature Rising) | - | - | - | - |

As shown in Table 2, when a thermoplastic polyimide resin sheet was used as the insulating layer (Comparative Example 4), as a current flowing in the short-circuit current shunt part was increasing from 30 A to 40 A, the temperature of the short-circuit current shunt part was rising; and when the current was 50 A, the temperature of the short-circuit current shunt part reached approximately 117°C, and thereafter sudden temperature rising was confirmed. It is believed that the insulating layer itself thermally decomposed, and at the same time, oxidation reaction occurred. In contrast, when a thermosetting polyimide resin sheet was used as the insulating layer (Example 1), although the temperature of the short-circuit current shunt part was rising as a current flowing in the short-circuit current shunt part was increasing, sudden temperature rising as described above was not confirmed. That is, it was confirmed that a thermosetting polyimide resin sheet was excellent as the insulating layer without thermal decomposition etc. occurred even if the temperature of the short-circuit current shunt part was high.

### 4. Confirmation of Effect of Short-circuit Current Shunt Part in Stacked Battery

The short-circuit current shunt part according to Example 1 was applied to a stacked battery, and the rise in temperature of the battery in nail penetration testing was compared between a case of including the short-circuit current shunt part (Application Example 1) and a case of not including the short-circuit current shunt part (Application Comparative Example 1).

### 4.1. Making Stacked Battery according to Application Example 1

### (Making Cathode Active Material)

Li_{1.15}Ni_{1/3}Co_{1/3}Mn_{1/3}W_{0.005}O₂ particles were coated with LiNbO₃ in the atmospheric environment using a tumbling fluidized coating machine (manufactured by Powrex Corporation), to be subjected to calcining in ambient atmosphere, to obtain cathode active material.

### (Making Cathode Material Layer)

A butyl butyrate solution of butyl butyrate and 5 wt% of a PVDF based binder (manufactured by Kureha Corporation), the above described cathode active material, and a sulfide solid electrolyte (mean particle size: 0.8 µm, Li₂S-P₂S₅ based glass ceramic containing LiI and LiBr) were put into a vessel of polypropylene, VGCF (manufactured by Showa Denko K.K.) was further added thereto as a conductive additive, and the resultant was stirred with an ultrasonic dispersive device (UH-50 manufactured by SMT Corporation) for 30 seconds. Next, the vessel was shaken with a mixer (TTM-1 manufactured by Sibata Scientific Technology Ltd.) for 3 minutes, and thereafter the resultant was further stirred with the ultrasonic dispersive device for 30 seconds. Further, after the vessel was shaken with the mixer for 3 minutes, aluminum foil (manufactured by Nippon Foil Manufacturing) was coated with the obtained paste using an applicator according to a blade method. After air-dried, the resultant was dried on a hot plate at 100°C for 30 minutes, to form a cathode material layer on the aluminum foil (cathode current collector layer).

### (Making Anode Material Layer)

A butyl butyrate solution of butyl butyrate and 5 wt% of a PVDF based binder (manufactured by Kureha Corporation), silicone having a mean particle size of 5 µm (Si as a simple substance manufactured by Kojundo Chemical Laboratory Co., Ltd.) as anode active material, and a sulfide solid electrolyte (mean particle size: 0.8 µm, Li₂S-P₂S₅ based glass ceramic containing LiI and LiBr) were put into a vessel of polypropylene, and were stirred with an ultrasonic dispersive device (UH-50 manufactured by SMT Corporation) for 30 seconds. Next, the vessel was shaken with a mixer (TTM-1 manufactured by Sibata Scientific Technology Ltd.) for 30 minutes, and thereafter the resultant was stirred with the ultrasonic dispersive device for 30 seconds. Further, after the vessel was shaken with the mixer for 3 minutes, copper foil was coated with the obtained paste using an applicator according to a blade method. After air-dried, the resultant was dried on a hot plate at 100°C for 30 minutes, to form an anode material layer on both faces of the copper foil (anode current collector layer).

### (Making Solid Electrolyte Layer)

A heptane solution of heptane and 5 wt% of a BR based binder (manufactured by JSR Corporation), and a sulfide solid electrolyte (mean particle size: 2.5 µm, Li₂S-P₂S₅ based glass ceramic containing LiI and LiBr) were put into a vessel of polypropylene, and stirred in an ultrasonic dispersive device (UH-50 manufactured by SMT Corporation) for 30 seconds. Next, the vessel was shaken with a mixer (TTM-1 manufactured by Sibata Scientific Technology Ltd.) for 30 minutes. After that, the resultant was stirred with the ultrasonic dispersive device for 30 seconds. Further, the vessel was shaken with the mixer for 3 minutes, and thereafter aluminum foil was coated with the obtained paste using an applicator according to a blade method. After air-dried, the resultant was dried on a hot plate at 100°C for 30 minutes, to form a solid electrolyte layer on the aluminum foil (base member).

### (Making Electric Elements)

After the layers were cut into the shape of the battery, the solid electrolyte layers were layered on both surfaces of each anode material layer, to be pressed at a pressure equivalent to 4 ton/cm² using CIP (manufactured by Kobe Steel, Ltd.). Thereafter, the aluminum foil was removed from the surface of each solid electrolyte layer, and the cathode material layer was layered on this surface, to be also pressed at a pressure equivalent to 4 ton/cm², to obtain an electric element having nine-layer structure of aluminum foil (cathode current collector layer)/cathode material layer/solid electrolyte layer/anode material layer/copper foil (anode current collector layer)/anode material layer/solid electrolyte layer/cathode material layer/aluminum foil (cathode current collector layer) (consisting of two electric elements sharing one anode current collector layer).

### (Stacking Short-circuit Current Shunt Part and Electric Elements)

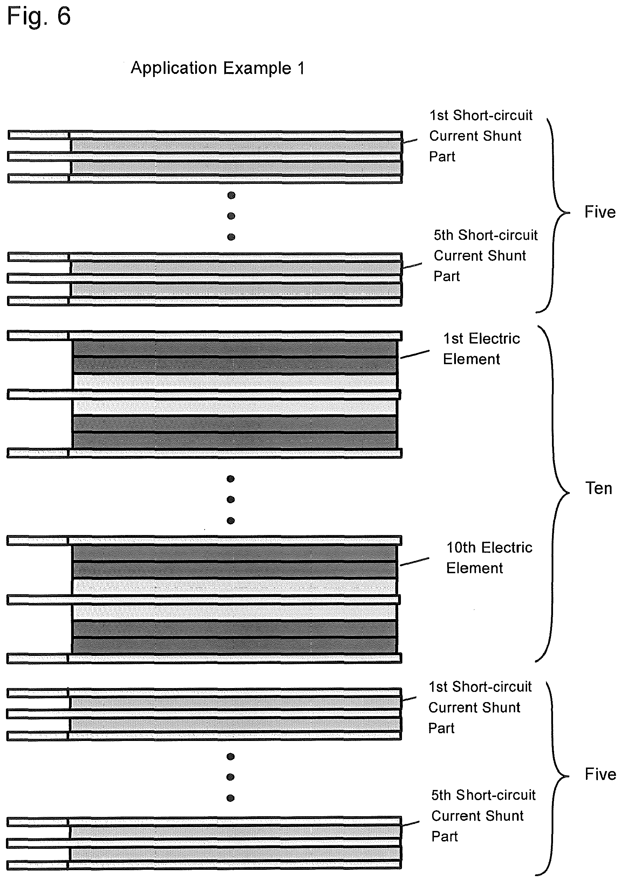

As shown in Fig. 6, ten short-circuit current shunt parts according to Example 1 and ten electric elements (corresponding to twenty single cells) were stacked in the order of five short-circuit current shunt parts, ten electric elements, and five short-circuit current shunt parts, and current collector tabs, which are not shown, were joined to each other by ultrasonic welding, to electrically connect the first current collector layers of the short-circuit current shunt parts to the cathode current collector layers of the electric elements, to electrically connect the second current collector layers of the short-circuit current shunt parts to the anode current collector layers of the electric elements, and to electrically connect a plurality of the electric elements to each other in parallel. This was put into a laminate pack, an opening of the laminate was sealed by thermal fusing while evacuated, to obtain a stacked battery for evaluation.

### 4.2. Making Stacked Battery according to Application Comparative Example 1

A stacked battery was made in the same way as Application Example 1 except that no short-circuit current shunt part was provided.

### 4.3. Evaluation by Nail Penetration Testing

The made stacked battery was charged from 0 V to 4.55 V, discharged from 4.55 V to 3 V, and further charged to 4.35 V. After charging, the stacked battery was penetrated by a nail (8 mm in diameter, 60 degrees in point angle) at 25 mm/sec in velocity, to measure the rise in temperature of the battery after 2 seconds had passed since the nail penetration. The temperature was measured by a thermocouple stuck to a position 12.5 mm away from the center of the nail penetrating on the surface of the laminate pack. The following Table 3 shows the ratio (T_{C1}/T_{E1}) of the rise in temperature of Application Comparative Example 1 (T_{C1}) to that of Application Example 1 (T_{E1}).

**Table 3**

| | Presence or not of Short-circuit Current Shunt Part | Ratio of Rise in Temperature |
|---|---|---|
| Appl. Ex. 1 | Yes | T_{C1}/T_{E1} = 119 |
| Appl. Comp. Ex. 1 | No | |

As apparent from the results shown in Table 3, in the stacked battery, providing the short-circuit current shunt part according to Example 1 made it possible to outstandingly suppress the rise in temperature of the battery in nail penetration testing to 1/119.

The above examples showed the advantageous effect when a thermosetting polyimide resin sheet was used as the insulating layer of the short-circuit current shunt part. It is believed that the insulating layer of the short-circuit current shunt part has only to be formed of material that has durability under constraint pressure and stacking pressure when the battery is normally used, is easy to break in nail penetration, and has thermal resistance in temperature rising. In this point, thermosetting resin generally has the above properties. That is, it is believed that forming the insulating layer of the short-circuit current shunt part by a thermosetting resin sheet brings about the same effect. From the viewpoint that the effect can be exerted more outstandingly, a thermosetting polyimide resin sheet is preferably used.

### Industrial Applicability

For example, the stacked battery according to this disclosure can be preferably used as an in-vehicle large-sized power source.

### Reference Signs List

10 short-circuit current shunt part
11 first current collector layer
11a first current collector tab
12 second current collector layer
12a second current collector tab
13 insulating layer
20 electric elements
21 cathode current collector layer
21a cathode current collector tab
22 cathode material layer
23 electrolyte layer
24 anode material layer
25 anode current collector layer
25a anode current collector tab
100 stacked battery

## Claims

1. A stacked battery (100) comprising at least one short-circuit current shunt part (10) and a plurality of electric elements (20), the short-circuit current shunt part (10) and the electric elements (20) being stacked, wherein
the short-circuit current shunt part (10) comprises a first current collector layer (11), a second current collector layer (12), and an insulating layer (13) provided between the first and second current collector layers (11, 12), all of these layers being stacked,
each of the electric elements (20) comprises a cathode current collector layer (21), a cathode material layer (22), an electrolyte layer (23), an anode material layer (24), and an anode current collector layer (25), all of these layers being stacked,
the first current collector layer (11) is electrically connected with the cathode current collector layer (21),
the second current collector layer (12) is electrically connected with the anode current collector layer (25),
the electric elements (20) are electrically connected to each other in parallel, and
the insulating layer (13) of the short-circuit current shunt part (10) is formed of a thermosetting resin sheet.

2. The stacked battery (100) according to claim 1, wherein
the directions as follows are the same directions:
a direction of stacking the cathode current collector layer (21), the cathode material layer (22), the electrolyte layer (23), the anode material layer (24), and the anode current collector layer (25) of each of the electric elements (20);
a direction of stacking the electric elements (20);
a direction of stacking the first current collector layer (11), the insulating layer (13), and the second current collector layer (12) of the short-circuit current shunt part (10); and
a direction of stacking the short-circuit current shunt part (10) and the electric elements (20).

3. The stacked battery (100) according to claim 1 or 2, wherein
the short-circuit current shunt part (10) is provided at least outside the electric elements (20) in terms of the direction of stacking the electric elements.

4. The stacked battery (100) according to any one of claims 1 to 3, wherein the electrolyte layer (23) is a solid electrolyte layer.
